# EUROPÄISCHE PATENTSCHRIFT

(11) **EP 3 642 606 B1**
(45) Veröffentlichungstag und Bekanntmachung des Hinweises auf die Patenterteilung: **09.07.2025**
(21) Anmeldenummer: 18727682.9
(22) Anmeldetag: 02.05.2018
(51) Int. Cl.: G01N 27/407

(54) **VERFAHREN ZUR HERSTELLUNG EINES SENSORELEMENTS FÜR EINEN ABGASSENSOR**
METHOD FOR MANUFACTURING A SENSOR ELEMENT FOR AN EXHAUST GAS SENSOR
PROCEDE DE FABRICATION D'UN ÉLÉMENT DE CAPTEUR DESTINÉ À UN CAPTEUR DE GAZ D'ÉCHAPPEMENT

(30) Priorität: 23.06.2017 DE 102017210622
(43) Veröffentlichungstag der Anmeldung: 29.04.2020
(73) Patentinhaber: Robert Bosch GmbH, 70442 Stuttgart (DE)
(72) Erfinder: SCHNEIDER, Jens, 71229 Leonberg (DE); OBLIERS-HOMMRICH, Britta, 70499 Stuttgart (DE); BUSE, Frank, 70437 Stuttgart (DE); PIWONSKI, Michael, 70188 Stuttgart (DE); KAISER, Ralf, 96158 Reundorf (DE); ROTTMANN, Andreas, 96188 Stettfeld (DE)
(86) Internationale Anmeldenummer: PCT/EP2018/061223
(87) Internationale Veröffentlichungsnummer: WO 2018/233916

(56) Entgegenhaltungen:
- DE-A1- 10 122 271
- DE-A1- 19 937 163
- DE-A1- 2 920 268
- DE-A1- 4 217 605
- DE-C2- 4 143 539
- US-A1- 2017 122 898

## Beschreibung

### Stand der Technik

Aus dem Stand der Technik, beispielsweise aus der DE102013211796 A1, ist bereits ein planares keramisches Sensorelement für einen Abgassensor zur Bestimmung einer physikalischen Eigenschaft eines Abgases, mit einer ersten und einer zweiten keramischen Folie, die durch Laminieren aufeinander angeordnet und miteinander verbunden sind, wobei die erste der keramischen Folien auf ihrer der zweiten keramischen Folie zugewandten Großfläche mit einer Funktionsstruktur versehen ist, bekannt.

Keramische Sensorelemente und ihre Herstellung sind auch bekannt aus der DE 41 43 539 C2, der DE 29 20 268 A1, der DE 199 37 163 A1, der DE 42 17 605 A1, der DE 101 22 27 A1 und der US 2017/0122 898 A1.

### Offenbarung der Erfindung

Die vorliegende Erfindung mit den Merkmalen des unabhängigen Anspruchs 1 basiert auf der Erkenntnis, dass es im Zusammenhang mit der oben erläuterten Technik im Bereich zwischen die keramischen Folien zu Undichtigkeiten kommen kann. Derartige Undichtigkeiten können beispielsweise daraus resultieren, dass die Funktionsstruktur eine nicht konstante Höhe aufweist bzw. die Funktionsstruktur sich nur längs eines Teils der Großfläche erstreckt. Eine Spaltbildung erfolgt dann bevorzugt neben der Funktionsfläche bzw. in Bereichen, in denen die Höhe der Funktionsstruktur vermindert ist.

Als problematisch an derartigen Undichtigkeiten hat es sich in Untersuchungen der Erfinder herausgestellt, dass sie mit Funktionsstörungen bzw. frühzeigen Ausfällen des Abgassensors korreliert sind.

Dadurch, dass erfindungsgemäß die Funktionsstruktur teilweise oder vollständig durch eine Einbettungsschicht umgeben ist, sind derartige Spalte aufgefüllt und Undichtigkeiten beseitigt. Die Funktion und die Langlebigkeit der Abgassensoren sind sicher gestellt.

Eine Funktionsstruktur eines keramischen Sensorelements eines Abgassensors ist im vorliegenden Zusammenhang insbesondere eine von dem keramischen Grundmaterial des Sensorelements unterscheidbare Struktur die unmittelbar der Funktion der Bestimmung der physikalischen Eigenschaft des Abgases dient oder mit dieser Bestimmung doch zumindest mittelbar in Zusammenhang steht. Insbesondere kann die Funktionsstruktur eines der folgenden Objekte sein und/oder mehrere der folgenden Objekte umfassen, wobei die Objekte wiederum nicht weiter eingeschränkt nebeneinander und/oder übereinander angeordnet sein können: Eine elektrische Leiterbahn, beispielsweise aus einem ein Edelmetall enthaltenden Material, eine flächig ausgebildete Elektrode, beispielsweise aus einem ein Edelmetall und ein Metalloxid enthaltenden Material, ein Hohlraum, ein mit einem durchströmbaren, porösen, beispielsweise ein Metalloxid enthaltenden Material gefüllter Raum, eine Isolationsschicht, beispielsweise aus einem ein Metalloxid enthaltenden Material, Trennstege, Sperrstege, Dichtrahmen, beispielsweise aus einem ein Metalloxid enthaltenden Material.

Erfindungsgemäß ist die Funktionsstruktur teilweise oder vollständig durch eine Einbettungsschicht umgeben. Die Einbettungsschicht ist also zumindest unter und/oder über und neben der Funktionsstruktur angeordnet. Die Funktionsstruktur ist in der Einbettungsschicht einbettet, das heißt, die Einbettungsschicht deckt nicht nur eine Ober- und/oder eine Unterseite der Funktionsstruktur teilweise oder vollständig ab, sondern zugleich grenzt die Einbettungsschicht auch lateral an die Funktionsstruktur an, insbesondere entlang des gesamten lateralen Außenumfangs der Funktionsstruktur.

Insbesondere füllt die Einbettungsschicht Spalte aus, die ansonsten zwischen den keramischen Folien, zwischen einer keramischen Folie und der Funktionsstruktur, innerhalb der Funktionsstruktur oder zwischen verschiedenen Funktionsstrukturen vorhanden wären.

Es ist bevorzugt, dass die Einbettungsschicht eine mittlere Schichtdicke von nicht weniger als 5µm aufweist, bevorzugt sogar nicht weniger als 10µm. Die mittlere Schichtdicke ist vorzugsweise nicht größer als 25µm.

Unter einer mittleren Schichtdicke wird hierbei ein Wert verstanden, der sich durch Mittelung der lokalen Höhe der Einbettungsschicht über eine flächenhafte Erstreckung der Einbettungsschicht, insbesondere über die gesamte flächenhafte Erstreckung der Einbettungsschicht ergibt. Die mittlere Schichtdicke kann insbesondere auch über eine Mittelung über die gesamte Großfläche der keramischen Folie, auf der die Einbettungsschicht angeordnet ist, bestimmt werden.

Die Einbettungsschicht besteht bevorzugt aus einem Material, das von dem Grundmaterial der keramischen Folien nur höchstens wenig verschieden ist.

Erfindungsgemäß besteht die Einbettungsschicht zu >50 Gew-% aus YSZ.

Das Bedrucken der Bedrucken zumindest einer der Großflächen der ersten keramischen Grünfolie mit zumindest einer Funktionsstruktur kann auch vorsehen, dass eine oder beide der Großflächen der ersten und/oder der zweiten und/oder weiterer keramischer Folien mit jeweils einer Funktionsstruktur oder mit mehreren Funktionsstrukturen bedruckt werden.

Hierzu kann das Bedrucken der zumindest einen Großfläche der ersten keramischen Grünfolien mit einer Einbettungspaste zeitlich nachgelagert oder vorher erfolgen. Es kann auch vorsehen, dass beide Großflächen der ersten und/oder der zweiten und/oder weiterer keramischer Grünfolien mit jeweils einer Einbettungspaste, insbesondere vollflächig, bedruckt werden, insbesondere alle solchen Großflächen von Grünflächen, die bei einem anschließenden Laminieren der keramischen Grünfolien einander unmittelbar gegenüber liegen.

Es ist bevorzugt, dass Bedrucken der zumindest einen Großfläche der ersten keramischen Grünfolien mit einer Einbettungspaste in mindestens zwei, bevorzugt sogar mindestens drei Druckschritten erfolgt, in denen aufeinander angeordnete Druckschichten erzeugt werden.

Das Bedrucken der zumindest einen Großfläche der ersten keramischen Grünfolie kann mit Hinblick auf die Großfläche vollflächig erfolgen. Es kann beispielsweise durch Siebdruck erfolgen.

Es wird erfindungsgemäß eine Einbettungspaste verwendet, deren Feststoffgehalt 55 - 75 Gew.% beträgt. Er kann zum Beispiel 60 - 70% betragen.

Dabei wird insbesondere eine Siebdruckpate verwendet,, die zu 55 - 75 Gew.% (insbesondere 60 - 70%) einen oxidkeramischen Feststoff aufweist, und deren rheologisches Verhalten insbesondere durch eine dynamische Viskosität von 20 - 60 Pa s (insbesondere 30 - 50 Pa s) bei einer Scherrate von γ = 30 1/s und/oder durch einen tan-Delta-Wert: 10 - 20 bei w = 1 rad/s bestimmt ist.

Derartige Siebdruckpasten sind, wenngleich sie noch druckbar sind, dennoch geeignet, potentielle Spalte in der benachbarten Struktur zuverlässig zu schließen. Im Unterschied zu vorbekannten Siebdruckpasten handelt es sich - bildlich gesprochen - um einen Keramikspachtel der insbesondere überdies während des Druckens fließt und somit insbesondere Unebenheiten und Höhenunterschiede ausgleicht, insbesondere den für den Laminiervorgang notwendige Anpressdruck gleichmäßig weitergibt.

Neben dem Verhalten dieser Siebdruckpaste während des Druckens (d.h. insbesondere die Fließfähigkeit vs. Kantensteifigkeit bei einer Scherbelastung während eines Rakelzugs / Siebdurchtritts) hat bei der hier beschriebenen Anwendung das Verhalten während eines Laminierprozesses (d.h. Fließfähigkeit der teilweise angetrockneten Paste im Schichtverbund durch Druckbelastung in der Laminierpresse) eine große Bedeutung.

Aus diesem Grund wurde bei der Paste auch das Binder- / Lösemittelsystem dergestalt angepasst, dass die angetrockneten Paste eine Restfließfähigkeit behält. Durch Erhöhung von Binder- und Weichmacheranteil sowie Reduzierung des Lösemittelanteils und gleichzeitiger Wahl eines Lösemittels mit niedrigem Dampfdruck wird eine vorteilhafte Restfließfähigkeit in diesem Prozeßschritt sichergestellt.

### Kurze Beschreibung der Zeichnung

Die Figuren 1a und 2a zeigen jeweils schematisch einen Querschnitt durch ein nicht erfindungsgemäß hergestelltes Sensorelement.

Die Figur 1b und 2b zeigen jeweils schematisch einen Querschnitt durch ein erfindungsgemäß hergestelltes Sensorelement.

Die Figur 3 zeigt schematisch das erfindungsgemäße Verfahren.

### Ausführungsformen

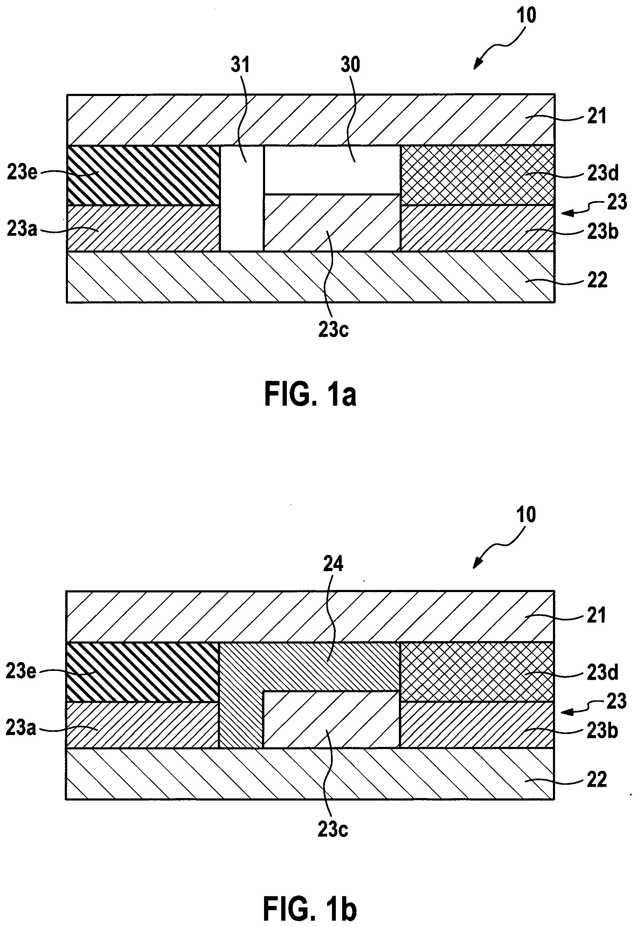

In Figur 1a ist ein prinzipieller Aufbau eines Sensorelements 10 einer Lambdasonde in einem Querschnitt dargestellt. Das keramische Sensorelement 10 weist eine erste und eine zweite keramische Folie 21, 22 aus YSZ auf die durch Laminieren aufeinander angeordnet und miteinander verbunden sind. Auf diesen Folien sind angeordnet: Eine erste Elektrode 23a und eine zweite Elektrode 23b, die Teil einer elektrochemischen Zelle sind, ein Trennsteg 23c aus YSZ, ein poröser Bereich 23d und ein isolierender Bereich 23e. Ersichtlich gibt es in diesem Sensorelement einen horizontalen Spalt 30 zwischen dem Trennsteg 23c und der ersten Festelektrolytfolie 21 sowie einen vertikalen Stoß 31 zwischen dem Trennsteg 23c und dem isolierenden Bereich 23e bzw. zwischen dem Trennsteg 23c und der ersten Elektrode 21. Derartige Spalte 30 und Stöße 31 sind aufgrund von Ungenauigkeiten bei der Herstellung der Funktionsstrukturen 23 bisher unvermeidlich.

Im Gegensatz hierzu zeigt die Figur 1b ein erfindungsgemäß hergestelltes Sensorelement 10. Im Unterschied zu dem oben beschriebenen Sensorelement 10 weist dieses eine Einbettungsschicht 24 auf, die die potentiellen Spalte 30, 31 zwischen dem Trennsteg 23c und dem isolierenden Bereich 23e bzw. zwischen dem Trennsteg 23c und der ersten Elektrode 21 im Beispiel vollständig verfüllt.

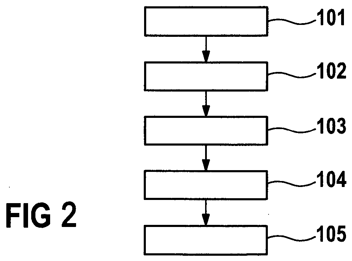

In Figur 2a ist ein prinzipieller Aufbau eines anderen Sensorelements 10 einer Lambdasonde in einem Querschnitt dargestellt. Das keramische Sensorelement 10 weist eine erste und eine zweite keramische Folie 21, 22 aus YSZ auf, die durch Laminieren aufeinander angeordnet und miteinander verbunden sind. Auf diesen Folien 21, 22 sind angeordnet: Eine erste Elektrode 23a und eine zweite Elektrode 23b, die Teil einer elektrochemischen Zelle sind, eine Sauerstoff-Ionenleitende Schicht 23f, ein Trennsteg 23c aus YSZ, ein poröser Bereich 23d und ein isolierender Bereich 23e. Ersichtlich gibt es in diesem Sensorelement 10 einen horizontalen Spalt 30 zwischen dem Trennsteg 23c und der ersten Festelektrolytfolie 21 wie er aufgrund von Ungenauigkeiten bei der Herstellung der Funktionsstrukturen 23 bisher unvermeidlich war.

Im Gegensatz hierzu zeigt die Figur 2b ein erfindungsgemäßes Sensorelement 10. Im Unterschied zu dem oben beschriebenen Sensorelement 10 weist dieses eine Einbettungsschicht 24 auf, die vollflächig in einer Schichtebene unterhalb der ersten Elektrode 23a und oberhalb der zweiten keramischen Folie 22 angeordnet ist. Der potentielle Spalt 30 zwischen dem Trennsteg 23c und der ersten Elektrode 23a wird im Beispiel vollständig verfüllt.

Das erfindungsgemäße Verfahren, mit dem beispielsweise die in den Figuren 2a und 2b gezeigten Sensorelemente 10 herstellbar sind, ist in der Figur 3 schematisch dargestellt. In einem ersten Verfahrensschritt 101 werden eine erste und eine zweite keramische Grünfolie bereitgestellt und in einem zweiten Verfahrensschritt 102 auf jeweils einer Großfläche mit einer Funktionsstruktur bedruckt wird, die beispielsweise Elektroden, Isolationen, poröse Schichten einen Trennsteg und so weiter umfassen. In einem dritten Verfahrensschritt, vor oder nach dem zweiten Verfahrensschritt 102, wird auf die mit Funktionsstrukturen versehenen oder auf die mit Funktionsstrukturen zu versehenen Großflächen der Grünfolien eine Einbettungspaste vollflächig oder lediglich entlang eines Teils der Grünfolien gedruckt. In einem vierten Verfahrensschritt 104 werden die keramischen Grünfolien so aufeinander laminiert, dass die mit Funktionsstrukturen und mit der Einbettungspaste versehenen Großflächen aufeinander zu liegen kommen. In einem fünften Verfahrensschritt 105 wird das keramische Sensorelement 10 durch Sinterung fertiggestellt. Es steht anschließend zum weiteren Verbau in einem Abgassensor zur Verfügung.

## Patentansprüche

1. Verfahren zur Herstellung eines planaren keramischen Sensorelements (10) für einen Abgassensor zur Bestimmung einer physikalischen Eigenschaft eines Abgases, mit mindestens einer ersten keramischen Folie (21) und einer zweiten keramischen Folie (22), die durch Laminieren aufeinander angeordnet und miteinander verbunden sind, wobei die erste keramische Folien (21) auf ihrer der zweiten keramischen Folie (22) zugewandten Großfläche mit einer Funktionsstruktur (23) versehen ist, wobei die Funktionsstruktur (23) teilweise oder vollständig durch eine Einbettungspaste (24) umgeben ist, wobei auf den Folien (22, 21) die Funktionsstruktur (23) angeordnet ist, wobei die Funktionsstruktur (23) aus einer erste Elektrode (23a) und einer zweite Elektrode (23b), die Teil einer elektrochemischen Zelle sind, einem Trennsteg (23c) aus YSZ, einen poröser Bereich (23d) und einen isolierender Bereich (23e) besteht, wobei ein horizontaler Spalt (30) zwischen dem Trennsteg (23c) und der ersten Festelektrolytfolie (21) sowie ein vertikaler Stoß (31) zwischen dem Trennsteg (23c) und dem isolierenden Bereich (23e) und/oder zwischen dem Trennsteg (23c) und der ersten Elektrode (23a) durch die Einbettungspaste (24) vollständig verfüllt sind,
wobei das Verfahren folgende Verfahrensschritte vorsieht:
- Bereitstellen (101) von zumindest einer ersten und einer zweiten keramischen Grünfolie (21, 22);
- Bedrucken (102) zumindest einer der Großflächen der ersten keramischen Grünfolie mit zumindest der einen Funktionsstruktur (23);
- Bedrucken (103) der zumindest einen Großfläche der ersten keramischen Grünfolien mit einer Einbettungspaste, wobei der Feststoffgehalt der Einbettungspaste 55 - 75 Gew.% aus YSZ beträgt.
- Aufeinander laminieren (104) der ersten keramischen Grünfolie (21) und der zweiten keramischen Grünfolie (22), sodass die zumindest eine Großfläche der ersten keramischen Grünfolie der zweiten keramischen Grünfolie zugewandt ist und
- Sintern (104) der aufeinander laminierten Grünfolien.

2. Verfahren zur Herstellung eines Sensorelements (10) nach Anspruch1, **dadurch gekennzeichnet, dass** die Einbettungsschicht (24) mindestens eine mittlere Schichtdicke von mindestens 5µm, bevorzugt mindestens 15µm aufweist.

3. Verfahren zur Herstellung eines Sensorelements (10) nach Anspruch 1 oder 2, **dadurch gekennzeichnet, dass** das Bedrucken (103) der zumindest einen Großflächen der ersten keramischen Grünfolien mit der Einbettungspaste eine Schicht erzeugt, deren mittlere Schichtdicke vor dem Sintern mindestens 10µm beträgt, insbesondere mindestens 20µm und höchstens 50µm, beispielsweise höchstens 40µm beträgt.

4. Verfahren zur Herstellung eines Sensorelements (10) nach einem der Ansprüche 1 bis 3, **dadurch gekennzeichnet, dass** das Bedrucken in mindestens 2, bevorzugt in mindestens 3, übereinander angeordneten Schichten erfolgt.

5. Verfahren zur Herstellung eines Sensorelements (10) nach einem der Ansprüche 1 bis 4, **dadurch gekennzeichnet, dass** die Einbettungspaste folgendes rheologisches Verhalten aufweist:
- Dynamische Viskosität: 20 - 60 Pa s bei einer Scherrate von γ = 30 1/s
- Kantensteifigkeit: tan-Delta-Wert: 10 - 20 bei w = 1 rad/s)

## Claims

1. Method of producing a planar ceramic sensor element (10) for an exhaust gas sensor for determination of a physical property of an exhaust gas, comprising at least a first ceramic film (21) and a second ceramic film (22) that have been laminated onto and connected to one another, wherein the first ceramic film (21) has been provided with a functional structure (23) over its large area facing the second ceramic film (22), wherein the functional structure (23) is partly or fully surrounded by an embedding paste (24), wherein the functional structure (23) is disposed on the films (22, 21), wherein the functional structure (23) consists of a first electrode (23a) and a second electrode (23b) that are part of an electrochemical cell, a separation pad (23c) composed of YSZ, a porous region (23d) and an insulating region (23e), with complete filling of a horizontal gap (30) between the separation pad (23c) and the first solid electrolyte film (21) and of a vertical join (31) between the separation pad (23c) and the insulating region (23e) and/or between the separation pad (23c) and the first electrode (23a) by the embedding paste (24),
wherein the method involves the following steps:
- providing (101) at least a first and a second ceramic green film (21, 22);
- printing (102) at least one of the large areas of the first ceramic green film with at least one functional structure (23);
- printing (103) the at least one large area of the first ceramic green films with an embedding paste, where the solids content of the embedding paste is 55-75% by weight of YSZ,
- co-laminating (104) the first ceramic green film (21) and the second ceramic green film (22) such that the at least one large area of the first ceramic green film faces the second ceramic green film and
- sintering (104) the co-laminated green films.

2. Method of producing a sensor element (10) according to Claim 1, **characterized in that** the embedding layer (24) has at least an average layer thickness of at least 5 µm, preferably at least 15 µm.

3. Method of producing a sensor element (10) according to Claim 1 or 2, **characterized in that** the printing (103) of the at least one large area of the first ceramic green films with the embedding paste creates a layer having an average layer thickness before sintering of at least 10 µm, in particular at least 20 µm, and at most 50 µm, for example at most 40 µm.

4. Method of producing a sensor element (10) according to any of Claims 1 to 3, **characterized in that** the printing is effected in at least 2, preferably in at least 3, superposed layers.

5. Method of producing a sensor element (10) according to any of Claims 1 to 4, **characterized in that** the embedding paste has the following rheological characteristics:
- dynamic viscosity: 20-60 Pa s at a shear rate of γ = 30 1/s
- edge stiffness: tan delta: 10-20 at ω = 1 rad/s)

## Revendications

1. Procédé de fabrication d'un élément de capteur céramique plan (10) pour un capteur de gaz d'échappement pour déterminer une propriété physique d'un gaz d'échappement, avec au moins une première feuille céramique (21) et une deuxième feuille céramique (22) qui sont agencées l'une sur l'autre et reliées entre elles par stratification, la première feuille céramique (21) étant pourvue d'une structure fonctionnelle (23) sur sa grande surface tournée vers la deuxième feuille céramique (22), la structure fonctionnelle (23) étant partiellement ou totalement entourée par une pâte d'enrobage (24), la structure fonctionnelle (23) étant agencée sur les feuilles (22, 21), la structure fonctionnelle (23) étant constituée d'une première électrode (23a) et d'une deuxième électrode (23b) qui font partie d'une cellule électrochimique, d'une barre de séparation (23c) en YSZ, d'une zone poreuse (23d) et d'une zone isolante (23e), un espace horizontal (30) entre la barre de séparation (23c) et la première feuille d'électrolyte solide (21) ainsi qu'un joint vertical (31) entre la barre de séparation (23c) et la zone isolante (23e) et/ou entre la barre de séparation (23c) et la première électrode (23a) étant complètement remplis par la pâte d'enrobage (24),
le procédé prévoyant les étapes de procédé suivantes :
- la fourniture (101) d'au moins une première et une deuxième feuille céramique verte (21, 22) ;
- l'impression (102) d'au moins l'une des grandes surfaces de la première feuille céramique verte avec au moins la structure fonctionnelle (23) ;
- l'impression (103) de l'au moins une grande surface des premières feuilles céramiques vertes avec une pâte d'enrobage, la teneur en solides de la pâte d'enrobage étant de 55 à 75 % en poids de YSZ.
- la stratification (104) de la première feuille céramique verte (21) et de la deuxième feuille céramique verte (22) l'une sur l'autre de telle sorte que l'au moins une grande surface de la première feuille céramique verte soit tournée vers la deuxième feuille céramique verte, et
- le frittage (104) des feuilles vertes stratifiées l'une sur l'autre.

2. Procédé de fabrication d'un élément de capteur (10) selon la revendication 1, **caractérisé en ce que** la couche d'enrobage (24) présente au moins une épaisseur de couche moyenne d'au moins 5 µm, de préférence d'au moins 15 µm.

3. Procédé de fabrication d'un élément de capteur (10) selon la revendication 1 ou 2, **caractérisé en ce que** l'impression (103) de l'au moins une grande surface des premières feuilles céramiques vertes avec la pâte d'enrobage produit une couche dont l'épaisseur de couche moyenne avant le frittage est d'au moins 10 µm, notamment d'au moins 20 µm et d'au plus 50 µm, par exemple d'au plus 40 µm.

4. Procédé de fabrication d'un élément de capteur (10) selon l'une quelconque des revendications 1 à 3, **caractérisé en ce que** l'impression est effectuée en au moins 2, de préférence en au moins 3, couches agencées les unes au-dessus des autres.

5. Procédé de fabrication d'un élément de capteur (10) selon l'une quelconque des revendications 1 à 4, **caractérisé en ce que** la pâte d'enrobage présente le comportement rhéologique suivant :
- viscosité dynamique : 20 à 60 Pa s pour un taux de cisaillement de y = 30 1/s
- rigidité des bords : valeur tan delta : 10 à 20 pour ω = 1 rad/s)
